Europäisches Patentamt

European Patent Office

Office européen des brevets

(11) Veröffentlichungsnummer: **0 460 671 A1**

## (12) EUROPÄISCHE PATENTANMELDUNG

(21) Anmeldenummer: 91109296.3

(22) Anmeldetag: 06.06.91

(51) Int. Cl.5: **F16D 69/04**

(30) Priorität: 07.06.90 DE 4018211

(43) Veröffentlichungstag der Anmeldung:
**11.12.91 Patentblatt 91/50**

(84) Benannte Vertragsstaaten:
**AT BE CH DE DK ES FR GB IT LI LU NL SE**

(71) Anmelder: **Bergische Stahl-Industrie**
**Papenbergerstrasse 38**
**W-5630 Remscheid(DE)**

(72) Erfinder: **Rocholl, Hans**
**Damaschkestrasse 17a**
**W-5630 Remscheid(DE)**
Erfinder: **Heinemann, Bertold**
**Ginsterbusch 12**
**W-5632 Wermelskirchen(DE)**

(74) Vertreter: **Jung, Hermann L., Dipl.-Chem.**
**Postfach 1728, Erlenweg 4**
**W-6380 Bad Homburg v.d.H.(DE)**

(54) Gesicherter Bremsbelaghalterverschluss.

(57) Die Erfindung betrifft einen gegen unbeabsichtigtes Öffnen gesicherten Bremsbelaghalterverschluss für einschiebbare Bremsbeläge von Scheibenbremsen, insbesondere für Schienenfahrzeuge, bei welchem ein Verschlussriegel quer zur Belagführung liegt und sich von der Rückseite des Belagträgers aus in eine darin vorgesehene Öffnung die Belagführung verschliessend erstreckt und in Verschluss-Stellung beiderseits der Öffnung von Augen o.ä. des Verschlussriegels und des Belagträgers durchsetzenden Bolzen,Stiften oder dergl.gehalten ist, wobei ein unter Federkraft stehendes Verschlusselement in seiner Ruhestellung den Verschlussriegel für den Bremsbelag blockiert und dass durch achsparallele Verschiebung bzw. Verdrehung des Verschlusselements die Blockierung aufhebbar ist.

EP 0 460 671 A1

Die Erfindung betrifft einen Bremsbelaghalterverschluss für einschiebbare Bremsbeläge von Scheibenbremsen, insbesondere für Schienenfahrzeuge, bei welchem ein Verschlussriegel quer zur Belagführung liegt und sich von der Rückseite des Belagträgers aus in eine darin vorgesehene Öffnung die Belagführung verschliessend erstreckt und in Verschlusstellung beiderseits der Öffnung von Augen o.ä. des Verschlussriegels und des Belagträgers durchsetzenden Bolzen, Stiften oder dergl. gehalten ist und der Verschlussriegel gegen selbsttätiges Öffnen gesichert ist.

Derartige Belaghalter sind zum Beispiel aus DE 24 34 oo4 C2 oder DE 22 13 o49 C2 bekannt. Es hat sich nun herausgestellt, dass im Rangierverkehr bei Lokomotiven Schwingungen bzw. Beschleunigungen auftreten können, welche den Bremsbelag, seine Führung im Halter bzw. das Verstärkungsblech deformieren, was dazu führt, dass die Sicherheit des Belaghalterverschlusses nicht mehr gegeben ist.

Der vorliegenden Erfindung liegt daher die Aufgabe zugrunde, diese Nachteile zu vermeiden und mit besonders einfachen Mitteln eine formschlüssige Sicherung der Verschlussriegel zu schaffen.

Die Lösung der Aufgabe besteht darin, dass ein unter Federkraft stehendes Verschlusselement in seiner Ruhestellung den Verschlussriegel für den Bremsbelag blockiert und dass durch achsparallele Verschiebung bzw. Verdrehung die Blockierung aufhebbar ist.

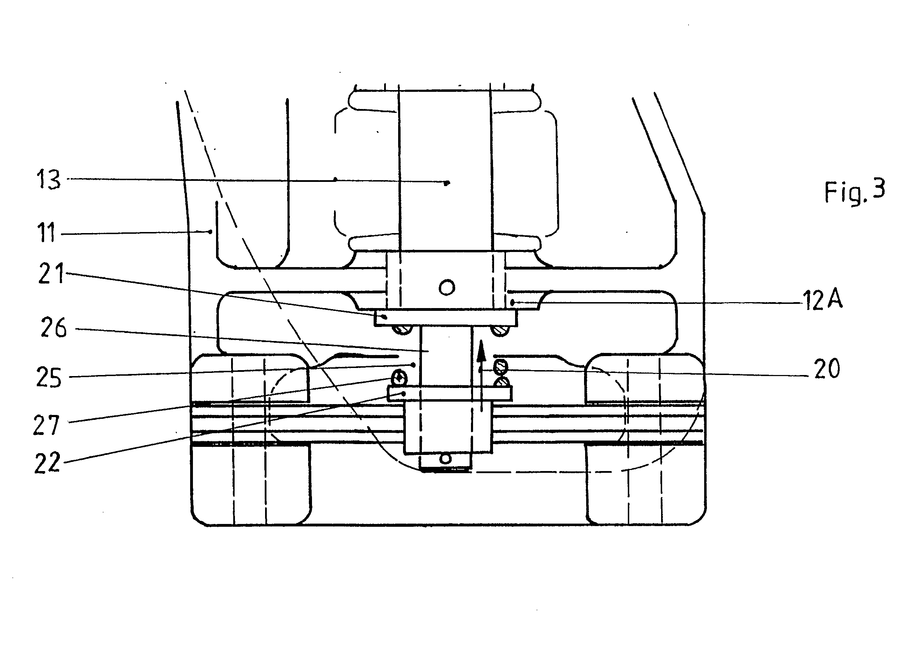

Vorteilhaft ist der Aufhängebolzen für die Bremsbacke in sich längsverschieblich in den Augen auf der Rückseite der Bremsbacke gelagert und unter Einwirkung einer Feder bis in seine den Verschlussriegel blockierende Ruhestellung verschiebbar. (Fig. und 2)
Ein andere vorteilhafte Ausbildung sieht vor, dass der Aufhängebolzen auf dem den Verschlussriegel tragenden Ende der Bremsbacke eine in sich verschiebbare Verlängerung trägt, welche unter der Einwirkung einer Feder bis in die den Verschlussriegel blockierende Ruhestellung verschiebbar ist. (Fig.3)
Eine zweckmässige Ausbildung besteht darin, dass der Aufhängebolzen eine sich in den den Verschlusgriegel überdeckenden Bereich erstreckende und drehbare Verlängerung trägt, welche eine Abflachung besitzt, deren Tiefe ein Öffnen des Verschlussriegels ermöglicht, und dass eine Drehfeder die Verlängerung in die den Verschlussriegel blockierende Ruhestellung dreht.

Der Vorteil dieser erfindungsgemässen Vorrichtung besteht vor allem darin, dass mit relativ sehr einfachen Mitteln eine absolut sichere Blockierung des Verschlussriegels in Geschlossen-Stellung erzielt wird, welche andererseits recht einfach aufgehoben werden kann, wenn der Bremsbelag verschlissen ist und ausgewechselt werden muss.

In den Zeichnungen sind beispielsweise Ausführungsformen der Erfindung dargestellt und zwar zeigt :

Figur 1    eine Ansicht der Rückseite einer Bremsbacke mit dem den Verschlussriegel tragenden Ende,

Figur 2    eine schematische Ansicht in Richtung des Pfeils II der Figur 1,

Figur 3    eine Ansicht der Rückseite einer anderen Ausbildung der Bremsbacke,

Figur 4    eine weitere Variation der Erfindung mit einer Dreh- oder Wickelfeder,

Figur 5    eine Ansicht nach dem Pfeil V der Figur 4.

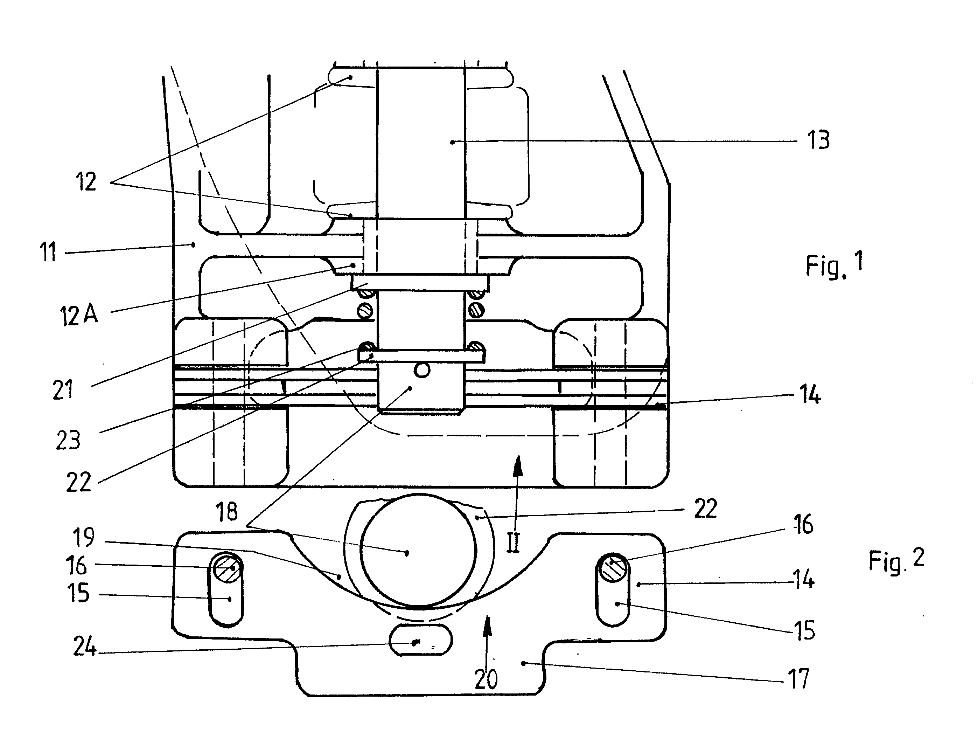

Nach Fig.1 ist auf der Rückseite der Bremsbacke 11 in mehreren Augen 12 ein Aufhängebolzen 13 gelagert, mit dem die Bremsbacke 11 an den (nicht dargestellten) Bremshebeln und Bremslaschen angelenkt ist. Die Bremsbacke 11 trägt am einen Ende einen Bremsbackenhalterverschluss, mit dem die Schwalbenschwanzführung für den Bremsbelag verschlossen wird, nachdem der Bremsbelag in die Führung eingeschoben ist. Der Bremsbackenhalterverschluss besteht aus einem senkrecht zur Bremsbackenebene verschiebbaren Verschlussriegel 14, der in Figur 2 dargestellt ist. Der Verschlussriegel 14 ist mit zwei Augen 15 auf zwei Stiften o.ä. 16 gelagert und erstreckt sich mit seinem Teil 17 in einen Schlitz im Belagträger 11, wo er in der in Figur 2 dargestellten Geschlossen-Stellung die Schwalbenschwanzführung für den Bremsbelag schliesst. Der Aufhängebolzen 13 ist an seinem dem Verschlussriegel 14 zugewandten Ende eine Verlängerung 18, mit der er sich in Ruhestellung bis über den Verschlussriegel 14 in eine dort vorgesehene Auskehlung 19 erstreckt, ohne den Verschlussriegel 14 zu berühren. Zwischen einem Auge 12A bzw. einer daran anliegenden Scheibe 21 und einer am Aufhängebolzen 13 befestigten Scheibe 22 ist eine Druckfeder 23 angeordnet, die den Aufhängebolzen 12 in die in Fig. 1 dargestellte Ruhestellung in den Augen 12 verschiebt. In dieser Stellung blockiert die Verlängerung 18 den Verschlussriegel 14, wie aus Fig. 2 ersichtlich ist.

Zum Öffnen des Verschlussriegels 14 wird der Aufhängebolzen 13 gegen die Kraft der Feder 23 soweit in Richtung des Pfeils II verschoben, bis die Verlängerung 18 aus dem Bereich des Verschlussriegels 14 herausgekommen ist. Jetzt kann in bekannter Weise der Verschlussriegel 14 mit der Öffnung 24 in Richtung des Pfeils 2o verschoben werden, wodurch das Teil 17 soweit verschoben wird, dass es nicht mehr die Schwalbenschwanzführung für den Bremsbelag blockiert. Die Sicherung funktioniert auch dann, wenn der Verschlussriegel 14 sich nur einseitig auf einem Stift 16 bewegt oder wenn der Verschlussriegel 14 drehbar um einen Stift 16 angeordnet ist, während sich der zweite Stift 16 Form eines Klemmstücks o.ä. präsentiert.

Nach Figur 3, wo gleiche Teile mit gleichen Bezugszeichen versehen sind, ist der Aufhängebolzen 13 unverschiebbar in den Augen 12, 12A gelagert und trägt auf seinem dem Verschlussriegel 14 zugewandten Ende eine Verlängerung 25, welche auf einer Verjüngung 26 des Aufhängebolzens 13 verschieblich gegen die Kraft der Feder 27 gelagert ist. Die Verlängerung 25 erstreckt sich, wie bei den Figuren 1 und 2 beschrieben, bis in den Bereich des Verschlussriegels 14 und blockiert dessen Bewegung zum Öffnen. Erst wenn die Verlängerung 25 in Richtung des Pfeils 2o zurückgeschoben ist, ist der Weg frei für die Öffnungsbewegung des Verschlussriegels 14. Solange der Verschlussriegel 14 in Offen-Stellung steht, legt sich die Verlängerung 25 gegen den Verschlussriegel 14 an und geht erst dann wieder in Ruhestellung, wenn der Verschlussriegel 14 in Geschlossen-Stellung steht, in der dann der Verschlussriegel 14 gesichert ist. Dabei wird die Bewegung der Verlängerung 25 in bekannter Weise so begrenzt, dass die Verlängerung mit Sicherheit ein selbständiges Öffnen des Verschlussriegels 14 verhindert.

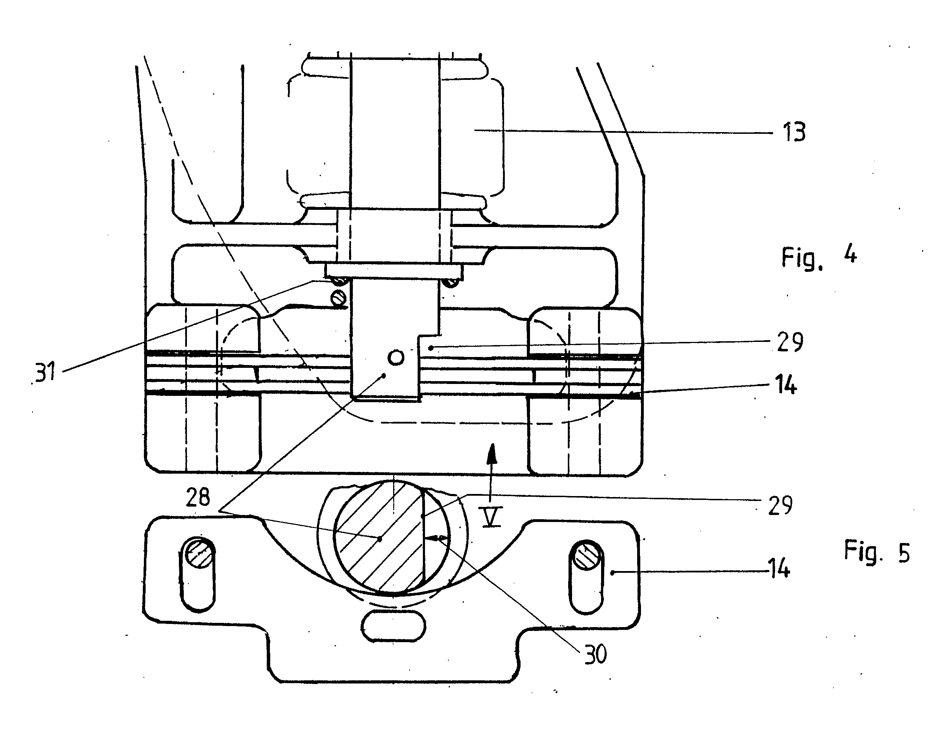

In den Figuren 4 und 5 ist eine Fortentwicklung der Sicherung dargestellt, wobei eine Verlängerung 28 drehbar am oder auf dem Aufhängebolzen 13 angeordnet ist. Diese Verlängerung 28 ist an einer Seite, an der sie über dem Verschlussriegel 14 liegt, mit einer Abflachung 29 versehen, deren Tiefe 3o sogross ist, dass der Verschlussriegel 14 in Offen-Stellung gehen kann, wenn die Abflachung 29 vor dem Verschlussriegel 14 steht. Eine Drehfeder 31 positioniert die Abflachung 29 in bekannter Weise so, dass normalerweise die Abflachung 29 nicht zum Verschlussriegel 14 zeigt, also der Verschlussriegel gesichert ist.

Es sind noch andere Möglichkeiten der Anordnung der Sicherung denkbar, welche aber im Rahmen der vorliegenden Erfindung liegen.

Im übrigen ist die erfindungsgemässe Sicherung bei allen Bremsbelaghalterverschlüssen anwendbar, bei denen ein Verschlusselement senkrecht zur Belaghalterebene verschwenkt oder verschoben werden muss, um die Schwalbenschwanzführung für den Bremsbelag verschliessen bzw. öffnen zu können.

## Patentansprüche

1. Gesicherter Bremsbelaghalterverschluss für einschiebbare Bremsbeläge von Scheibenbremsen, insbesondere für Schienenfahrzeuge, bei welchem ein Verschlussriegel quer zur Belagführung liegt und sich von der Rückseite des Belagträgers aus in eine darin vorgesehene Öffnung die Belagführung verschliessend erstreckt und in Verschluss-Stellung beiderseits der Öffnung von Augen o.ä. des Verschlussriegels und des Belagträgers durchsetzenden Bolzen, Stiften oder dergl. gehalten ist und der Verschlussriegel gegen selbsttätiges Öffnen gesichert ist, dadurch gekennzeichnet, dass ein unter Federkraft stehendes Verschlusselement in seiner Ruhestellung den Verschlussriegel für den Bremsbelag blockiert und dass durch achsparallele Verschiebung bzw. Verdrehung des Verschlusselements die Blockierung aufhebbar ist.

2. Gesicherter Bremsbelaghalterverschluss nach Anspruch 1, dadurch gekennzeichnet, dass der Aufhängebolzen (13) für die Bremsbacke in sich längsverschieblich in den Augen (12,12A) auf der Rückseite der Bremsbacke (11) gelagert und unter Einwirkung einer Feder (23) bis in seine den Verschlussriegel (14) blockierende Ruhestellung verschiebbar ist. (Fig.1 und 2)

3. Gesicherter Bremsbelaghalterverschluss nach Anspruch 1, dadurch gekennzeichnet, dass der Aughängebolzen (13) auf dem den Verschlussriegel (14) tragenden Ende der Bremsbacke (11) eine in sich verschiebbare Verlängerung (25) trägt, welche unter der Einwirkung der Feder (27) bis in die den Verschlussriegel (14) blockierende Ruhestellung verschiebbar ist. (Fig. 3)

4. Gesicherter Bremsbelaghalterverschluss nach Anspruch 1, dadurch gekennzeichnet, dass der Aufhängebolzen (13) eine sich in den den Verschlussriegel (14) überdeckenden Bereich erstreckende und drehbare Verlängerung (28) trägt, welche eine Abflachung (29) besitzt, deren Tiefe (3o) ein Öffnen des Verschlussriegels (14) ermöglicht und dass eine Drehfeder (31) die Verlängerung (28) in die den Verschlussriegel (14) blockierende Ruhestellung dreht.

Fig. 1

Fig. 2

Fig. 3

13
11
21
26
25
27
22

12A
20

EP 0 460 671 A1

13

Fig. 4

31

29

14

28

29

$\underline{V}$

14

Fig. 5

30

EP 0 460 671 A1

**Europäisches Patentamt**

# EUROPÄISCHER RECHERCHENBERICHT

Nummer der Anmeldung

EP 91109296.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| X | <u>GB - A - 2 070 705</u> (LUCAS INDUSTRIES LTD) * Fig. 1,2 * | 1,2,3 | F 16 D 69/04 |
| X | <u>GB - A - 2 110 779</u> (WESTINGHOUSE LTD) * Fig. 1,2 * | 1,2,3 | |
| D,A | <u>DE - C3 - 2 434 004</u> (BERGISCHE STAHL-INDUSTRIE) * Gesamt * | 1 | |
| D,A | <u>DE - C3 - 2 213 049</u> (KNORR-BREMSE GMBH) * Gesamt * | 1 | |

**RECHERCHIERTE SACHGEBIETE (Int. Cl.⁵)**

F 16 D 69/00

Der vorliegende Recherchenbericht wurde für alle Patentansprüche erstellt.

| Recherchenort | Abschlußdatum der Recherche | Prüfer |
|---|---|---|
| WIEN | 11-10-1991 | KAMMERER |